(19) Europäisches Patentamt
European Patent Office
Office européen des brevets

(11) **EP 4 773 517 A1**

(12) **EUROPEAN PATENT APPLICATION**
published in accordance with Art. 153(4) EPC

(43) Date of publication:
08.07.2026 Bulletin 2026/28

(21) Application number: 24869857.3

(22) Date of filing: 14.06.2024

(51) International Patent Classification (IPC):
*H04B 7/06* (2006.01)

(52) Cooperative Patent Classification (CPC):
H04B 7/06

(86) International application number:
PCT/CN2024/099269

(87) International publication number:
WO 2025/066295 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 CN 202311270511

(71) Applicant: ZTE CORPORATION
Shenzhen, Guangdong 518057 (CN)

(72) Inventors:
• MA, Xiaoying
Shenzhen, Guangdong 518057 (CN)
• CHEN, Mengzhu
Shenzhen, Guangdong 518057 (CN)
• XU, Jun
Shenzhen, Guangdong 518057 (CN)
• DAI, Bo
Shenzhen, Guangdong 518057 (CN)
• GUO, Qiujin
Shenzhen, Guangdong 518057 (CN)
• MA, Xuan
Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **CHANNEL STATE INFORMATION PROCESSING METHOD, AND USER EQUIPMENT, NETWORK DEVICE AND STORAGE MEDIUM**

(57) The present application relates to, but is not limited to, the technical field of communications. Provided are a channel state information processing method, and a user equipment, a network device and a storage medium. The channel state information processing method comprises: a user equipment receiving high-level configuration signaling, wherein the high-level configuration signaling comprises a CSI report configuration, and the CSI report configuration comprises at least one sub-configuration; for the at least one sub-configuration, generating a CSI sub-report corresponding to the sub-configuration; and sending a CSI report which includes at least one CSI sub-report.

```
user equipment                                           network device

        S210: Receive high-layer configuration signaling,
        wherein the high-layer configuration signaling includes
        a CSI report configuration, and the CSI report
        configuration includes at least one sub-configuration

        S220: Generate, for the at least one sub-
        configuration, a CSI sub-report
        corresponding to the sub-configuration

        S230: Send a CSI report which includes at least
        one CSI sub-report
```

FIG. 2

## Description

### CROSS-REFERENCE TO RELATED APPLICATIONS

The present application is claims priority to Chinese Application No. 202311270511.0, filed with the Chinese Patent Office on September 27, 2023, with the title "CHANNEL STATE INFORMATION PROCESSING METHOD, USER EQUIPMENT, NETWORK DEVICE AND STORAGE MEDIUM", the disclosure of which is hereby incorporated by reference in its entirety.

### TECHNICAL FIELD

The present application relates to the technical field of communications, in particular, to a channel state information processing method, user equipment, a network device, and a storage medium.

### BACKGROUND

Technologies such as high bandwidth and large-scale antennas are widely used in 5G communication systems. High bandwidth refers to a technology with fast network transmission speed that can complete data transmission and communication faster. Large scale antenna refers to a technology that utilizes multiple antenna elements to simultaneously transmit and receive signals in multiple directions. However, although these technologies can improve the speed of wireless connections, they also lead to a significant increase in energy consumption of a base station.

Channel State Information (CSI) refers to information that describes the characteristics and conditions of a wireless channel. CSI can include parameters such as signal-to-noise ratio, rank indicator, channel quality indicator (CQI), etc., to evaluate the quality and performance of the channel. At present, in order to reduce energy consumption of base stations, antenna shutdown or power adjustment can be used. After the base station enters the energy-saving state, the channel between the base station and the user equipment (UE) will change, so it is necessary to update the channel state in a timely manner to avoid affecting the data scheduling accuracy and efficiency of the terminal. The base station can have multiple energy-saving configurations in the energy-saving state, and the configurations corresponding to different sets of energy-saving configurations are also different. How to enable UE to perform CSI measurement and report based on different configurations is currently a technical problem that needs to be solved.

### SUMMARY

In the first aspect, the embodiments of the present application provide a channel state information processing method, performed by user equipment, the method includes: receiving high-layer configuration signaling, wherein the high-layer configuration signaling includes a CSI report configuration, and the CSI report configuration includes at least one sub-configuration; generating, for the at least one sub-configuration, a CSI sub-report corresponding to the sub-configuration; and sending a CSI report which includes at least one CSI sub-report.

In the second aspect, the embodiments of the present application provide a channel state information processing method, performed by a network device, the method includes: sending to user equipment high-layer configuration signaling which includes a CSI report configuration, so that the user equipment generates a CSI sub-report corresponding to a sub-configuration for the at least one sub-configuration in the CSI report configuration, and sends a CSI report which includes the at least one CSI sub-report.

In the third aspect, the embodiments of the present application provide a user equipment including: one or more processors; and a memory storing one or more programs, which when executed by the one or more processors, cause the one or more processors to implement the channel state information processing method according to the first aspect.

In the fourth aspect, the embodiments of the present application provide a network device including: one or more processors; and a memory storing one or more programs, which when executed by the one or more processors, cause the one or more processors to implement the channel state information processing method according to the second aspect.

In the fifth aspect, the embodiments of the present application provide a computer-readable storage medium storing computer programs, which when executed by a processor, implements the channel state information processing method according to the first aspect, or the channel state information processing method according to the second aspect.

### BRIEF DESCRIPTION OF DRAWINGS

The accompanying drawings are used to provide further understanding of the technical solution of the present application and constitute a part of the specification. The accompanying drawings are used together with the embodiments of the present application to explain the technical solution of the present application and do not constitute restrictions on the technical solution of the present application.

     Fig. 1 is a schematic diagram of a wireless communication system for transmitting a CSI report provided in embodiments of the present application.
     Fig. 2 is a flowchart of a channel state information processing method performed by user equipment provided in embodiments of the present application.
     Fig. 3 is a structural schematic diagram of CSI report configuration provided in embodiments of the present application.

Fig. 4 is a flowchart of a channel state information processing method performed by a network device provided in the embodiments of the present application.

Fig. 5 is a structural schematic diagram of user equipment provided in embodiments of the present application.

Fig. 6 is a structural schematic diagram of the network device provided in embodiments of the present application.

**DETAILED DESCRIPTION**

In order to make the purpose, technical solution, and advantages of the present application clearer and more understandable, the following will provide further detailed explanations of the present application in conjunction with the accompanying drawings and embodiments. It should be understood that the specific embodiments described herein are only used to explain the present application and are not intended to limit the present application.

It should be understood that in the description of the embodiments of the present application, if there is any mention of "first", "second", etc., it is only for the purpose of distinguishing technical features, and cannot be understood as indicating or implying relative importance or implying the number or order of the indicated technical features. "At least one of" refers to one or more, and "multiple" refers to two or more. "And/or" describes the association relationship of the associated object, indicating that there can be three types of relationships, for example, A and/or B, which can represent situations where A exists alone, A and B exist simultaneously, or B exists alone. A and B can be singular or plural. The character "/" generally indicates that the associated object before and after is an "or" relationship. "At least one of the following" and similar expressions refer to any group of these items, including any group of singular or plural items. For example, at least one of a, b, and c can represent: a, b, c, a and b, a and c, b and c, or a and b and c, where a, b, and c can be single or multiple.

In addition, the technical features involved in the various embodiments of the present application described below can be combined with each other as long as they do not conflict with each other.

In order to facilitate the understanding of the embodiments of the present application and to provide clear and concise descriptions of the following embodiments, a brief introduction to the relevant technology is first given:

Feedback channel: refers to a channel in which part or all of the received information is transmitted to the receiving end through a certain path when a communication system uses a link adaptation technology. Feedback channel is also a part of wireless channel. In the field of wireless communication, a wireless channel is a channel that uses radio wave signals as transmission media to transmit data signals, commonly known as a wireless "frequency band". In the application of link adaptation technology, the receiving end needs to adjust the communication link parameters based on the channel state information, which is transmitted from the receiving end to the sending end through the feedback channel.

Channel State Information (CSI) refers to information that describes the characteristics and conditions of a wireless channel. CSI can include parameters such as the signal-to-noise ratio, rank indicator, channel quality indicator (CQI), etc., to evaluate the quality and performance of the channel.

CSI measurement: refers to the process of measuring and obtaining CSI. In wireless communication systems, different techniques and methods can be used to measure CSI in order to obtain information about the quality and characteristics of the channel.

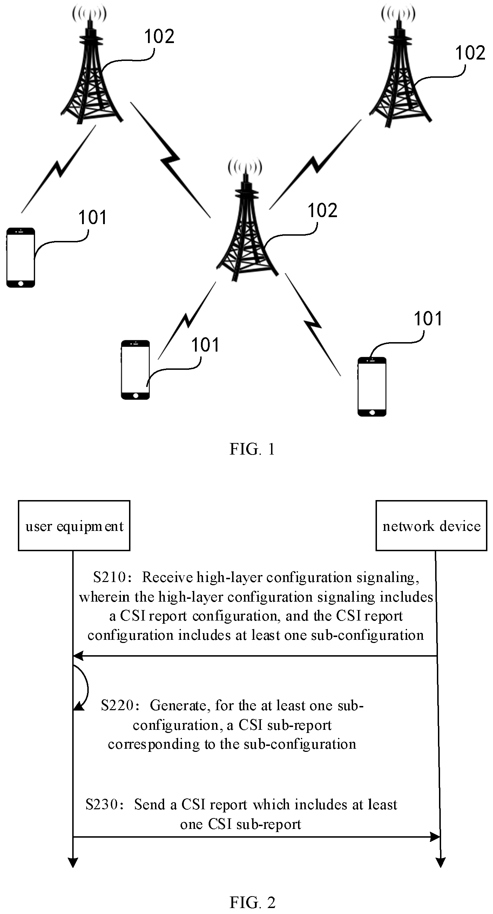

Fig. 1 shows a schematic diagram of a wireless communication system for transmitting CSI reports in an embodiment. In one embodiment, a wireless communication system 100 includes User Equipment (UE) 101 and a network device 102. Although a specific number of user equipment 101 and network devices 102 are depicted in Fig. 1, those skilled in the art will recognize that any number of user equipment 101 and network devices 102 can be included in the wireless communication system 100.

User equipment 101, also known as a mobile station (MS), a mobile terminal (MT), terminal, etc., is a device that provides voice and/or data connectivity to users, or a chip integrated into the device, such as handheld devices with wireless connectivity, in car devices, etc. At present, some examples of terminal devices are: mobile phones, desktops, tablets, laptops, handheld computers, mobile Internet devices (MID), wearable devices, virtual reality (VR) devices, augmented reality (AR) devices, wireless terminals in industrial control, wireless terminals in self driving, wireless terminals in remote medical surgery, wireless terminals in smart grid, wireless terminals in transportation safety, wireless terminals in smart city, wireless terminals in smart home, 5G Residential Gateway (5G-RG), etc.

The user equipment 101 is provided with a client of an application. An application, also known as an application software (APP), is a computer program designed to accomplish one or more specific tasks, typically requiring interaction with users, such as video applications, gaming applications, social applications, etc.

The network device 102 can be a base station, Customer Premise Equipment (CPE), Access Point (AP), Residential Gateway, and other devices. The network device 102 includes an Ingress Provider Edge (Ingress PE) and an Egress Provider Edge (Egress PE). The Ingress Provider Edge is a network device or node located at the boundary of the edge network, responsible for introducing external traffic from terminal devices into the network. The Ingress Provider Edge is a critical component in the service provider network, used to connect external networks and the service provider network, and to introduce external traffic into the service provider network for further routing and transmission. The Ingress Provider Edge can be physical devices such as routers and switches, or servers deployed with virtual routers or switches. The Egress Provider Edge and the Ingress Provider Edge can be paired together to form an edge router pair. Egress Provider Edge is used to transfer traffic from the network to external networks. Egress Provider Edge is connected to the cloud for communication. User equipment 101 is connected to the Ingress Provider Edge of the network edge device for communication.

Technologies such as high bandwidth and large-scale antennas are widely used in 5G communication systems. High bandwidth refers to a technology with fast network transmission speed that can complete data transmission and communication faster. Large scale antenna refers to a technology that utilizes multiple antenna elements to simultaneously transmit and receive signals in multiple directions. However, although these technologies can improve the speed of wireless connections, they also lead to a significant increase energy consumption of a base station.

At present, in order to reduce energy consumption of base stations, antenna shutdown or power adjustment can be used. After the base station enters the energy-saving state, the channel between the base station and the user equipment (UE) will change, so it is necessary to update the channel state in a timely manner to avoid affecting the data scheduling accuracy and efficiency of the terminal. The base station can have multiple energy-saving configurations in energy-saving state, and the configurations corresponding to different sets of energy-saving configurations are also different. How to enable UE to perform CSI measurement and report based on different configurations is currently a technical problem that needs to be solved.

In order to solve the above problems, the embodiments of the present application provide a channel state information processing method that enables UE to perform CSI measurement and reporting according to different configurations, improving the accuracy and efficiency of data scheduling.

The embodiments described in the present application can be implemented in communication systems, such as in at least one of the following systems: Global System for Mobile Communications (GSM) or any other second-generation cellular communication system, Universal Mobile Telecommunications System (UMTA, 3G) based on Wideband Code Division Multiple Access (W-CDMA), High Speed Packet Access (HSPA), Long Term Evolution (LTE), LTE Advanced, a system based on IEEE 802.11 specification, system based on IEEE 802.15 specification, and/or a fifth generation (5G) mobile or cellular communication system or a 6G mobile system; and future mobile communication systems. However, the embodiments are not limited to the system provided in the above examples, and those skilled in the art can apply the solution to other communication systems with necessary attributes.

The channel state information processing method of the embodiments of the present application can be applied to various types of networks, including but not limited to the following networks, such as Internet Protocol (IP) networks, Synchronous Digital Hierarchy (SDH) networks, Packet Transport Network (PTN), IP Radio Access Network, etc.

As shown in Fig. 2, which is a flowchart of the channel state information processing method provided in the embodiments of the present application, applied to the user equipment 101. The implementation process of the method may include but is not limited to Steps S210 to S230, and each step will be introduced in sequence below:

At Step S210: high-layer configuration signaling is received, wherein the high-layer configuration signaling includes a CSI report configuration, and the CSI report configuration includes at least one sub-configuration.

It should be noted that high-layer configuration signaling refers to Radio Resource Control (RRC) signaling or Media Access Control (MAC) control element (MAC CE) signaling, which is used to send CSI report configuration information. CSI report configuration refers to the configuration information used to configure CSI measurement and reporting. The sub-configuration corresponds to the associated configuration information of a set of CSI sub-reports. It can be understood that user equipment 101 can perform CSI measurement and reporting based on high-layer configuration signaling. Each sub-configuration is associated with a different antenna state or power state. Each sub-configuration has a corresponding associated channel state information - reference signal (CSI-RS resource). When the sub-configuration is configured with the first configuration information and/or the third configuration information, or the sub-configuration is only configured with the third configuration information, the sub-configuration is associated with all the CSI-RS resources in the CSI-RS resource set associated with the CSI report configuration. When the sub-configuration is configured with the second configuration information, the sub-configuration is associated with a part of the CSI-RS resources in the CSI-RS resource set associated with the CSI report configuration. The sub-configuration configured with the second configuration information can indicate the resource identification (resource ID) of one or more CSI-RS resources, and one or more of the CSI-RS resources are resources associated with the sub-configuration for channel measurement.

It should be noted that the CSI report configuration is associated with one CSI-RS resource set, the CSI-RS resource set includes K CSI-RS resources. Each sub-configuration corresponds to one or more CSI-RS resources in the associated CSI-RS resource set. K is a positive integer.

It can be understood that one CSI-RS resource set can include (be configured with) one or more CSI-RS resources, and the number of ports in each CSI-RS resource can be one of 1, 2, 4, 8, 12, 16, 24 or 32. However, in some cases, when one CSI-RS resource set is configured with only one CSI-RS resource, the maximum number of ports in the CSI-RS resource can be 32; when one CSI-RS resource set is configured with two two CSI-RS resources , the maximum number of ports in each CSI-RS resource can be 16; and when one CSI-RS resource set is configured with more than two CSI-RS resources, the maximum number of ports in each CSI-RS resource can be 8. This restriction will limit the configuration of sub-configurations. In CSI report configuration configured with sub-configurations, the CSI-RS resources associated with different sub-configurations can be different. Therefore, when one CSI-RS resource set is configured with a large number of CSI-RS resources, the number of ports in each CSI-RS resource will be limited, thereby limiting the application scenarios of configuring sub-configurations containing one or more CSI-RS resources.

Based on this, in the case of K=A1, the CSI-RS resource set is configured with no more than 32 CSI-RS ports; in the case of K=A2, the CSI-RS resource set is configured with no more than 16 CSI-RS ports; and in the case of K=A3, the CSI-RS resource set is configured with no more than 8 CSI-RS ports. Where the values of A1, A2, and A3 are related to at least one of the following: the type of a sub-configuration configured in the CSI report configuration, the number of sub-configurations configured in the CSI report configuration, the time domain type of a CSI report, the maximum number of sub-configurations that can be configured in the CSI report configuration, the maximum number of sub-configurations that can be triggered by one trigger state of DCI or MAC CE in the CSI report configuration, or a capability parameter of user equipment.

It should be noted that the time domain type of CSI report includes any one of periodic, semi persistent, and aperiodic.

It can be understood that A1, A2, and A3 refer to the number of CSI-RS resources configured in the CSI-RS resource set.

It should be noted that the values of A1, A2, and A3 are associated with the types of sub-configuration configured in the CSI report configuration. For example, when user equipment 101 reports a restriction that resources are configured according to sub-configurations, and the CSI report configuration includes sub-configurations configured with second configuration information, then the resources associated with the sub-configurations in the CSI report configuration are configured according to restriction that resources are configured according to the sub-configuration. Otherwise, the resources associated with the CSI report configuration will be configured according to the restriction that resources are configured according to the CSI report configuration, and A1, A2, and A3 are loose values. Where, the loose value of A1 refers to A1>1, the loose value of A2 refers to A2>2, and the loose value of A3 refers to A3>8. For example, A1=4, A2=8, A3=16.

In another example, the values of A1, A2, and A3 are associated with the type of sub configuration configured in the CSI report configuration. When the CSI report configuration includes a sub-configuration configured with the second configuration information, the resources associated with the sub-configuration in the CSI report configuration are configured according to the restriction that resources are configured according to the sub-configuration. Otherwise, the resources associated with the CSI report configuration will be configured according to restriction that resources are configured according to CSI report configuration. Where, A1=1, A2=2, A3=8.

In another example, different sub-configuration types are based on different configuration restrictions. For example, when the CSI report configuration includes a sub-configuration configured with second configuration information, the resources associated with the sub-configuration in the CSI report configuration are configured according to the restriction that resources are configured according to the sub-configuration. Otherwise, the resources associated with the CSI report configuration are configured according to restriction that resources are configured according to the CSI report configuration, and A1, A2, A3 are loose values of A1, A2, A3.

It should be noted that the first configuration information refers to at least one of a rank restriction parameter, a codebook subset restriction parameter, a port subset indicator parameter, a parameter n1 representing the number of antenna ports in the first dimension, a parameter n2 representing the number of antenna ports in the second dimension, or a parameter ng representing the number of antenna port panels.

It should be noted that the Rank Indicator is a parameter used to indicate the maximum MIMO (Multiple Input Multiple Output) level that a receiving device can support. The rank restriction parameter (RI restriction) is a parameter used to restrict the RI value feedback by the UE. The codebook Subset Restriction parameter refers to the parameter used to restrict the selection range of a codebook. The codebook subset restriction parameter can ensure the selection of appropriate codebook subsets in MIMO systems to match channel conditions and antenna configurations. The port subset indicator parameter refers to the parameters used to indicate the port subset of CSI-RS antennas. The port subset indicator parameter is used to determine the corresponding transmission and reception configurations. The parameter n1 representing the number of antenna ports in the first dimension is associated with the number of antenna ports in the first dimension (horizontal direction) of the CSI-RS antenna ports, which is a parameter used to describe the scale of the antenna configuration. The parameter n2 representing the number of antenna ports in the second dimension is associated with the number of antenna ports in the second dimension (vertical direction) of the CSI-RS antenna ports, which is also a parameter used to describe the scale of the antenna configuration. The parameter ng representing the number of antenna port panels represents the number of antenna port panels, which is used to describe the scale and distribution of antenna configurations.

These parameters are set in the embodiments of the present application set to describe important parameters such as antenna configuration, channel state, and system performance, so as to perform appropriate signal processing and data stream allocation during transmission. Different values and combinations can adjust the capacity, reliability, and transmission efficiency of the system.

It should be noted that the second configuration information refers to one or more CSI-RS resources in the CSI-RS resource set associated with the sub-configuration. Or the second configuration information refers to one or more CSI-RS resource IDs or resource ID lists in the CSI-RS resource set associated with the sub-configuration.

It should be noted that the sub-configuration type refers to the content of the sub-configuration, and different configuration information represents different sub-configuration types.

It should be noted that the values of A1, A2, and A3 are associated with the capability parameter of the user equipment. The capability parameter of the user equipment refers to the capability that the user equipment reports to the network device. The capability parameter of the user equipment can indicate at least one of the following: whether the user equipment supports loose values of A1, A2, A3, the scale factor (f) for calculating A1, A2, or A3 (e.g, A1=A1 *f, different A1, A2, or A3 can be associated with the same or different scale factor), the offset value (b) for calculating A1, A2, or A3 (e.g, A1=A1+b, different A1, A2, or A3 can be associated with the same offset value or with separate offset values), the loose values of A1, A2, A3, the sub-configuration types corresponding to the loose values of A1, A2, and A3 that the user equipment supports, whether the user equipment supports the sub-configuration types for resource configuration according to sub-configuration restrictions, and whether there is restriction that resources are configured according to sub-configuration. Where the restrictions on whether to configure resources according to sub-configurations refers to a CSI-RS resource associated with a sub-configuration, which need to meet the requirement that if K=A1 CSI-RS resources are configured, the resource can be configured with a maximum of 32 CSI-RS ports. If K=A2 CSI-RS resources are configured, then each resource can be configured with a maximum of 16 CSI-RS ports. If K=A3 CSI-RS resources are configured, then each resource can be configured with a maximum of 8 CSI-RS ports. In some embodiments, A1=1, A2=2, A3=8.

For example, in one embodiment, if the CSI report configuration includes one or more sub-configurations configured with either the first configuration information or the third configuration information, in the CSI-RS resource set associated with the CSI report configuration, the restrictions that A1 = 2, 3, or 4, A2 = 3 or 4, and A3 is an integer greater than or equal to 8 or less than or equal to 12 are used. For example, A1=2, A2=4, A3=8. Another example, A1=4, A2=8, A3=16.

For example, in another embodiment, if a CSI report configuration includes one or more sub-configurations configured with second configuration information, in the CSI-RS resource set associated with the CSI report configuration, the constraints that A1 = 2, 3, or 4; A2=integers greater than or equal to 2 or less than or equal to 8, and A3=integers greater than or equal to 8 or less than or equal to 16 are used. For example, A1=4, A2=8, A3=16.

In some embodiments, the UE capability is to report the supported loose values of A1, A2, or A3.

In some embodiments, the values of A1, A2, and A3 are related to the number of sub-configurations configured in the CSI report configuration. For example, if there are X sub-configurations configured in a CSI report configuration, then, A1=X, or A2=2*X, or A3=A3 *X, or A1=A1+X, or A2=A2+X, or A3=A3+X. For example, if X sub-configurations are configured in a CSI report configuration, then A2=2*X or A3=4*X.

In some embodiments, the values of A1, A2, and A3 are related to the maximum number of sub-configurations that can be configured in the CSI report configuration. For example, in a CSI report configuration, up to Y sub-configurations can be configured, then A1=Y. For example, in a CSI report configuration, up to Y sub-configurations can be configured, then A2=2*Y or A3=4*Y.

In some embodiments, the values of A1, A2, and A3 are related to the maximum number of sub-configurations that can be triggered by one trigger state of a DCI or MAC CE in the CSI report configuration. For example, in a CSI report configuration, the maximum number of sub-configurations that can be triggered by one trigger state of DCI or MAC CE is N, A1=N. For example, in a CSI report configuration, the maximum number of sub-configurations that can be triggered by the trigger state of a DCI or MAC CE is N, A2=2*N or A3=4*N.

In some embodiments, the values of A1, A2, and A3 are related to at least one of the following: the time domain type (such as periodic, semi-persistent, aperiodic) of the CSI report, the number (X)of sub-configurations configured in CSI report configuration, the maximum number(Y) of sub-configurations that can be configured in CSI report configuration, the maximum number(N) of sub-configurations that can be triggered by the trigger state of DCI or MAC CE in CSI report configuration, or the UE capability.

For example, when the time domain type of CSI report is periodic, the values of A1, A2, and A3 are related to Y (for example, A1=Y, or A2=2 * Y, or A3=A3 * Y, or A1=A1+Y, or A2=A2+Y, or A3=A3+Y). When the time domain type of CSI report is semi-persistent or aperiodic, the values of A1, A2, and A3 are related to N (e.g. A1=N, or A2=2 * N, or A3=A3 * N, or A1=A1+N,or A2=A2+N, or A3=A3+N).

For example, when the time domain type of CSI report is periodic, the values of A1, A2, and A3 are related to X (for example, A1=X, or A2=2 * X, or A3=A3 * X, or A1=A1+X, or A2=A2+X, or A3=A3+X). When the time domain type of CSI report is semi-persistent or aperiodic, the values of A1, A2, and A3 are related to N (e.g., A1=N, or A2=2 * N, or A3=A3 * N, or A1=A1+N, or A2=A2+N, or A3=A3+N).

In some embodiments, the maximum number (Y) of sub-configurations that can be configured in CSI report configuration and the maximum number (N)of sub-configurations that can be triggered by trigger state of DCI or MAC CE in CSI report configuration, are reported by UE capabilities. In some embodiments, the maximum number(Y) of sub-configurations that can be configured in a CSI report configuration and the maximum number (N)of sub-configurations that can be triggered by a trigger state of DCI or MAC CE in a CSI report configuration are predefined.

In some embodiments, UE capability reports the maximum number of sub-configurations that can be configured in a CSI report configuration, and the maximum number of sub-configurations that can be configured in a CSI report configuration is the maximum value among them. In some embodiments, UE capability reports the maximum number of sub-configurations that can be triggered by a trigger state in a CSI report configuration, and the maximum number of sub-configurations that can be triggered by the trigger state of DCI or MAC CE in a CSI report configuration is the maximum value among them.

In some embodiments, the values of A1, A2, and A3 are related to the number of sub-configurations that can be configured in a CSI report configuration reported by UE capability, or the number of sub-configurations that can be triggered by a triggering state in a CSI report configuration reported by UE capability.

In one embodiment, the CSI report configuration also includes a codebook configuration (codebook-Config), in which the first type of parameter is configured. In one embodiment, the CSI report configuration further includes a codebook configuration, which is used to calculate the CSI of the number of ports configured in the CSI-RS resources associated with the CSI report configuration.

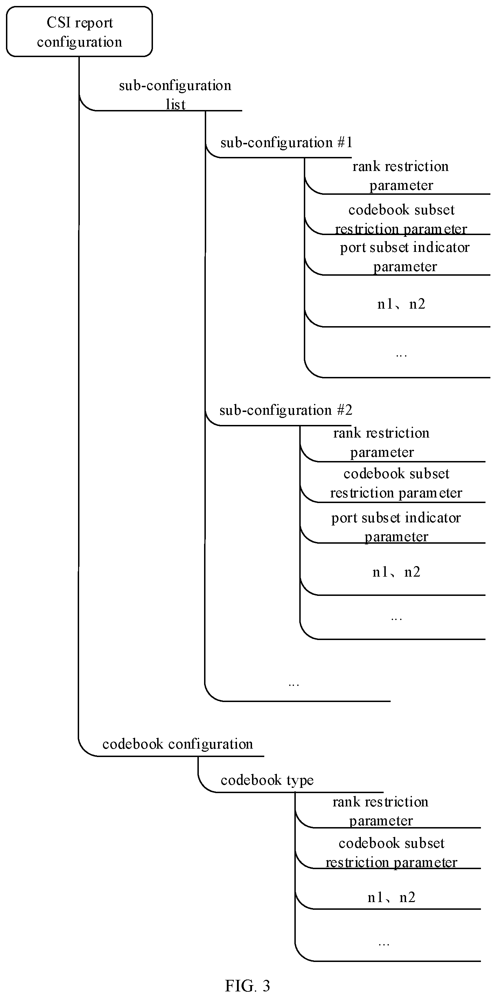

For example, as shown in Fig. 3, the CSI report configuration includes a sub-configuration list and a codebook configuration. The sub-configuration list includes at least one sub-configuration, such as sub-configuration # 1, sub-configuration # 2, etc.

At Step 220: a CSI sub-report corresponding to the sub-configuration is generated for the at least one sub-configuration.

In one embodiment, generating the CSI sub-report corresponding to the sub-configuration includes that: the CSI sub-report corresponding to the sub-configuration is determined according to a first type of parameter and a CSI-RS resource correspondingly associated with the sub-configuration.

It can be understood that the first type of parameter refers to a parameter used to determine the CSI sub-report. As shown in Fig. 3, the first type of parameter includes a first type of parameter configured in the codebook configuration and/or a first type of parameter configured in the sub-configuration.

It should be noted that the first type of parameter includes at least one of a rank restriction parameter, a codebook subset restriction parameter, a port subset indicator parameter, a parameter n1 representing the number of antenna ports in the first dimension, a parameter n2 representing the number of antenna ports in the second dimension, and a parameter ng representing the number of antenna port panels.

In one embodiment, in the case where a first condition is not satisfied, the first type of parameter configured in the codebook configuration is considered, and then the first type of parameter configured in the codebook configuration is used to determine the CSI sub-report corresponding to the sub-configuration not configured with the first type of parameter, that is, the first type of parameter in the codebook configuration is used to calculate CSI corresponding to the sub-configuration not configured with the first type of parameter.

It should be noted that the first condition includes at least one of the following:

(1) Part of the sub-configurations in the CSI report configuration are configured with the first type of parameter, and the number of associated ports in at least one sub-configuration configured with the first type of parameter is equal to the number of ports configured in the CSI-RS resource set associated with the CSI report configuration.
(2) All of the sub-configurations in the CSI report configuration are configured with the first type of parameters.
(3) When the CSI report configuration does not include a sub-configuration that only contains third configuration information or second configuration information.
(4) High-layer configuration signaling indicates that the first type of parameter configured in the codebook configuration is neglected.
(5) The CSI report configuration includes at least one sub-configuration configured with the first type of parameter.

In another embodiment, in the case where the first condition is satisfied, the first type of parameter configured in the codebook configuration is neglected, and then the first type of parameter used in the CSI sub-report corresponding to the sub-configuration is obtained in by at least one of the following manners: in the case where the sub-configuration is configured with the first type of parameter , the first type of parameter is obtained from the sub-configuration; or in the case where the sub-configuration is not configured with the first type of parameter , the first type of parameter is obtained from another sub-configuration, wherein the number of associated ports in the other sub-configuration is equal to the number of ports configured in the CSI-RS resource set associated with the CSI report configuration.

According to the embodiments of the present application, the first condition is set to determine the manner of obtaining the first type of parameter used in the CSI sub-report corresponding to the sub-configuration, so that the UE measures and reports CSI according to different configurations, effectively reducing energy consumption of network device and improving the efficiency and accuracy of data adjustment.

In one embodiment, in the case where a second condition is satisfied, the CSI report configuration is configured with the first type of parameter only in the sub-configuration. In one embodiment, in the case where the second condition is satisfied, the first type of parameter is not configured in the codebook configuration according to the CSI report configuration.

It should be noted that the second condition includes at least one of the following:

(1) Part of the sub-configurations in the CSI report configuration are configured with the first type of parameter, and the number of associated ports in at least one sub-configuration configured with the first type of parameter is equal to the number of ports configured in the CSI-RS resource set associated with the CSI report configuration.
(2) All of sub-configurations in the CSI report configuration are configured with the first type of parameters.
(3) A specific behaviors indicated by high-layer configuration signaling.
(4) Each sub-configuration in the CSI report configuration only includes sub-configurations that contain the first configuration information only.
(5) The CSI report configuration includes at least one sub-configuration configured with the first type of parameter.

It should be noted that for a CSI report configuration configured with one or more sub-configurations, in the case where at least one of the sub-configurations includes first configuration information and/or third configuration information, the CSI report configuration is configured with the first type of parameter only in the sub-configuration, and at least one of the sub-configurations only includes the third configuration information, then the first type of parameter in the sub configuration that only includes third configuration information is obtained in at least one of the following manners.

The first type of parameter is obtained from the sub-configuration that is configured with the first type of parameter and has the smallest sub-configuration index, or the first type of parameter is obtained from the sub-configuration with the largest number of associated ports and configured with the first type of parameter, or the first type of parameter is obtained from predefined first type of parameters, or the first type of parameter from default first type of parameters, or the first type of parameter is obtained from the predefined sub-configuration, or the first type of parameter is obtained from the codebook configuration.

It should be noted that the default first type of parameter is the default value that can be flexibly set based on the actual situation for the included rank restriction parameter, codebook subset restriction parameter, port subset indicator parameter, parameter n1 for the number of antenna ports in the first dimension, parameter n2 for the number of antenna ports in the second dimension, and parameter ng for the number of antenna port panels. In some embodiments, these default values may be set in the protocol. For example, the codebook subset restriction parameters defaults to all 1 (i.e. there are no codebooks that cannot be reported), or the rank restriction parameter defaults to all 1 (i.e. there are no rank restriction parameter values that cannot be reported), or the parameter n1 for the number of antenna ports in the first dimension, the parameter n2 for the number of antenna ports in the second dimension, and the parameter ng for the number of antenna port panels default to the combination of n1 and n2 with the minimum N1 corresponding to the port number of the associated CSI-RS resource configuration, or defaults to no ng parameter, i.e. there is only one panel.

It should be noted that the predefined first type of parameters represent the first type of parameters with different numbers of ports that will be predefined in the protocol. When the first type of parameters are not configured in the sub-configuration, the predefined first type of parameters that are associated with the corresponding port number of CSI-RS resource configuration will be used. For example, different first type of parameter corresponding to different numbers of ports are predefined, and the predefined first type of parameter is selected according to the number of ports.

It should be noted that the third configuration information refers to the power offset value configured in the sub-configuration.

It should be noted that a sub-configuration can contain one or more of the first configuration information, the second configuration information, and the third configuration information, but the same sub-configuration cannot contain both the first and second configuration information at the same time. The sub-configuration configured in a CSI report configuration cannot contain both a sub-configuration containing the first configuration information and a sub-configuration containing the second configuration information.

The embodiments of the present application set a second condition to determine the configuration of the first type of parameter in the sub-configuration of the CSI report configuration, so that the UE measures and reports CSI according to different CSI configurations, effectively reducing the energy consumption of network device and improving the efficiency and accuracy of data adjustment.

In one embodiment, for a CSI report configuration with one or more sub-configurations, in the case where a third condition is satisfied, the first type of parameter is configured in the codebook configuration of the CSI report configuration.

It should be noted that the third condition includes at least one of the following:

(1) At least one sub-configuration in the CSI report configuration is configured with the first type of parameter, and the number of ports not indicated in the at least one sub-configuration configured with the first type of parameter is equal to the number of ports configured in the CSI-RS resource set associated with the CSI report configuration.

(2) The CSI report configuration includes one or more sub-configurations that are only configured with third configuration information.

(3) The CSI report configuration includes one or more sub-configurations that are configured with second configuration information.

(4) A specific behavior indicated by high-layer configuration signaling.

It should be noted that for a CSI report configuration with one or more sub-configurations, if one or more sub-configurations contain both the sub-configuration configured with the first configuration information and the sub-configuration configured with the third configuration information at the same time, and the number of ports indicated by/associated in at least one sub-configuration configured with the first configuration information is equal to the number of ports configured in the CSI-RS resource set associated with the CSI report configuration. At this time, the CSI report configuration does not have the first type of parameter other than those configured within the sub-configuration.

It should be noted that for a CSI report configuration with one or more sub-configurations, if one or more sub-configurations contain both the sub-configuration configured with the first configuration information and the sub-configuration configured with the third configuration information at the same time, and the number of ports indicated/associated in none of the sub-configuration configured with the first configuration information is equal to the number of ports configured in the CSI-RS resource set associated with the CSI report configuration. At this time, the CSI report configuration does not include sub-configurations that are only configured with the third configuration information.

It should be noted that when a CSI report configuration contains at least one sub-configuration indicating the same number of ports as those configured in the CSI-RS resource associated with the CSI report configuration, the first type of parameter configured in the codebookConfig are the same as those configured in the sub-configuration.

In one embodiment, prior to generating the CSI sub-report corresponding to the sub-configuration for the at least one sub-configuration in step S220, the channel state information CSI processing method provided by the embodiments of the present application further includes: downlink control information (DCI) is received from a physical downlink control channel (PDCCH), wherein the DCI indicates reporting CSI reports and triggering one or more sub-configurations.

It should be noted that Physical Downlink Control Channel (PDCCH) is an important channel in the wireless communication systems, which is used to transmit system control information to coordinate and control the downlink communication of User Equipment (UE).

It should be understood that, generating the CSI sub-report corresponding to the sub-configuration for the at least one sub-configuration includes that: the CSI sub-report corresponding to the triggered sub-configuration is generated for each triggered sub-configuration.

It should be understood that, when the CSI report configuration is configured with one or more sub-configurations, and the DCI triggers more than one sub-configuration, the user equipment needs to report multiple sets of CSI sub-reports.

At Step 230: the CSI report which includes at least one CSI sub-report is sent.

It should be noted that the CSI report refers to a report that includes at least one CSI sub-report that the user equipment needs to report. That is to say, multiple sets of CSI sub-reports that need to be reported by the same CSI report configuration are included in the same CSI report.

In one embodiment, since the processing time for reporting multiple sets of CSI sub-reports by the user equipment also, at this time sending the CSI report containing at least one CSI sub-report includes the following.

In the case where first time is greater than a first threshold and second time is greater than a second threshold, a CSI report containing at least one of the CSI sub-reports is sent through a physical uplink shared channel (PUSCH); where the first time represents the time length between an end symbol of the PDCCH and a start symbol of the PUSCH; and the second time represents the time length between an end symbol of an aperiodic CSI-RS resource associated with the CSI report or a measurement resource associated with the CSI report and a start symbol of the PUSCH.

It should be understood that, the first threshold is a value used to indicate whether the first time, which represents the time length between the end symbol of the PDCCH and the start symbol of the PUSCH, meets or exceeds the preset condition. The second threshold is a value used to indicate whether the second time, which represents the time length between the end symbol of the aperiodic CSI-RS resources associated with the CSI report or the measurement resource associated with the CSI report and the start symbol of the PUSCH, meets or exceeds the preset condition.

It should be noted that the first threshold is related to the first parameter, and the second threshold is related to the second parameter. In the same situation, the larger the first parameter value, the larger the first threshold, and the larger the second parameter value, the larger the second threshold. The first and second parameters are mainly related to the time taken by the user equipment to process/prepare CSI reports.

In the embodiments of the present application, when the first time is greater than the first threshold and the second time is greater than the second threshold, the CSI report containing at least one CSI sub-report is transmitted through the physical uplink shared channel PUSCH. For different situations, the processing time required by the UE may vary. By using different first and second parameters, the first and second thresholds can be different to meet the processing time requirements of the UE in different situations, ensuring CSI processing, and improving the data scheduling efficiency.

It should be noted that the values of the first parameter and the second parameter are related to at least one of the following: the number of ports configured in a CSI-RS resource configuration corresponding to the triggered sub-configuration; the number of CSI-RS ports indicated by the triggered sub-configuration; the maximum number of CSI-RS ports indicated by the triggered sub-configuration; the sum of the number of CSI-RS ports associated/indicated by the triggered sub-configuration; the number of triggered sub-configurations; the frequency characteristics of CSI report reporting; the capability parameter of user equipment; or the type of triggered sub-configuration.

It should be noted that the frequency characteristics of CSI report reporting refers to the CSI reporting methods under different frequency bandwidths used in the wireless communication systems. The frequency characteristics for CSI report reporting includes both wideband and narrowband CSI reporting methods. Wideband CSI reporting can provide more comprehensive channel state information, suitable for larger frequency bandwidth scenarios, such as those used for big data transmission. Narrowband CSI reporting can provide more accurate and detailed channel state information, suitable for smaller frequency bandwidth scenarios, such as those used for smaller data transmission. Therefore, the frequency characteristics for CSI report reporting can be set according to actual needs to determine the values of the first and second parameters.

It should be noted that the first parameter corresponding loose and tight values and/or the second parameter includes corresponding loose and tight values, therefore, in the case where the fourth condition is satisfied, the first parameter and/or the second parameter take the corresponding loose values, respectively.

It should be noted that loose value refers to the value obtained by moderately relaxing the parameter requirements in the system. Loose values can provide UE with more sufficient processing time when dealing with complex CSI measurement calculations. Relatively, the tight value is equivalent to the non-relaxing value, which refers to the processing time when the requirements for conditions or restrictions are relatively strict and the time requirements are tight.

It should be noted that the fourth condition includes at least one of the following:

(1) The number of triggered sub-configurations is greater than a third threshold, wherein the third threshold is an integer greater than or equal to 2.
(2) The reporting manner for CSI report is wideband CSI reporting.
(3) The number of ports of the CSI-RS resource associated with the triggered sub-configuration is greater than a fourth threshold, wherein the fourth threshold is an integer less than or equal to 4.
(4) The sum of the number of CSI-RS ports associated with/indicated by the triggered sub-configuration is greater than a fifth threshold, wherein the fifth threshold is an integer less than or equal to 8.
(5) The user capability parameter indicates that the first parameter and/or the second parameter take the corresponding loose values, respectively.
(6) The type of the triggered sub-configuration is the first type, wherein the first type indicates the sub-configuration configured with the first configuration information or the second configuration information.
(7) The number of ports of the maximum CSI-RS resource associated with the triggered sub-configuration is greater than the fourth threshold, wherein the fourth threshold is an integer less than or equal to 4.

It should be noted that, as shown in Table 1, Z2, Z2', Z1, Z1'in Table 1 are used to represent predefined values. Therefore, the first parameter (Z) and/or the second parameter (Z') taking the corresponding loose values includes one of the following:

(1)

$$Z=Z2+Z2'.$$

(2) $Z=n*Z2+m*Z1$, where m is an integer greater than or equal to 1 and n is an integer greater than or equal to 1.

(3) $Z=n*Z2+m*Z2'$, where m is an integer greater than or equal to 1 and n is an integer greater than or equal to 1.

(4) $Z=Z2*n$, where n is an integer greater than or equal to 2.

(5)

$$Z' = 2*Z2'.$$

(6) $Z' = Z2'*n$, where n is an integer greater than or equal to 2.

(7)

$$Z' = Z2+Z2'.$$

(8) $Z'=n*Z2'+m*Z1'$, where m is an integer greater than or equal to 1 and n is an integer greater than or equal to 1.

(9) $Z' = n*Z2'+m*Z2$, where m is an integer greater than or equal to 1 and n is an integer greater than or equal to 1.

(10)

$$Z > Z2.$$

(11)

$$Z' > Z2'.$$

Table 1

| $\mu$ | Z 1 [symbols] | | Z2[symbols] | |
|---|---|---|---|---|
| | Z1 | Z1' | Z2 | Z2' |
| 0 | 22 | 16 | 40 | 37 |
| 1 | 33 | 30 | 72 | 69 |
| 2 | 44 | 42 | 141 | 140 |
| 3 | 97 | 85 | 152 | 140 |
| 5 | 388 | 340 | 608 | 560 |
| 6 | 776 | 680 | 1216 | 1120 |

Where $\mu$ represents the value associated with the subcarrier spacing.

It should be noted that the first parameter (Z) and/or the second parameter (Z') have a tight value of $Z=Z2$ for the first parameter and $Z'=Z2'$ for the second parameter.

It should be noted that the CSI report includes a sub-configuration configured with second configuration information and a sub-configuration configured with third configuration information, wherein the sub-configuration configured with the third configuration information is associated with a first type of CSI-RS resource. The first type of CSI-RS resources includes at least one of the following:

(1) The CSI-RS resource indicated by second configuration information configured in the sub-configuration with the lowest index among the sub-configurations configured with the second configuration information.
(2) The CSI-RS resource configured by the high-layer parameter.
(3) The CSI-RS resource indicated by the second configuration information configured in the sub-configuration in which the second configuration information includes the resource in the lowest index number.
(4) A predefined CSI-RS resources.
(5) The CSI-RS resources indicated by the second configuration information configured in the predefined sub-configuration.

In some embodiments, in one CSI report configuration, if there is a sub-configuration configured with second configuration information, there will not be sub-configuration configured with only third configuration information. In other words, if there is the sub-configuration configured with second configuration information, each sub-configuration includes the second configuration information.

It should be noted that the first configuration information, second configuration information, or third configuration information of different sub-configurations can be the same or different. For example, both sub-configurations have configured with the first configuration information, but the specific parameter values of the first configuration information are different.

In some embodiments, the CSI report configuration includes one or more sub-configurations, the CSI report configuration is aperiodic and associated CSI-RS thereof is aperiodic, and the third time indicated by the DCI triggering the CSI report configuration needs to be greater than the sixth threshold. Where the third time is the time interval between DCI and the triggered CSI-RS, and the sixth threshold is a positive integer greater than or equal to 1.

In some embodiments, sub-configurations and shared CMR (channel measurement resource) cannot be configured simultaneously in the same CSI report configuration. In some embodiments, when one or more sub-configurations are configured in a CSI report configuration, the associated CSI-RS resources will not be configured with a resource pair. In some embodiments, if the sub-configuration and shared resources are configured in the same CSI report configuration, the configuration of the sub-configuration is neglected. Neglecting the configuration of the sub-configuration means not to use the configuration in the sub-configuration for CSI measurement. In some embodiments, if the sub-configuration and shared resources are configured in the same CSI report configuration, the configuration related to shared resources is neglected. Neglecting the configuration related to shared resources means not using the configuration related to shared resources for CSI measurement. The configuration related to shared resources includes shared resource configuration, CSI-Report Mode configuration, or resource pair configuration, etc.

In some embodiments, the codebook subset restrictions include both codebook subset restrictions and codebook subset restrictions on i2 (codebooksubstract-i2).

In some embodiments, when the CSI report contains multiple CSI sub-reports and is transmitted in two parts (2 parts), the CSI information of Part 2 can be discarded (i.e. not transmitted) when resources are insufficient or the bitrate does not meet the conditions. The wideband part in Part 2 (including the Channel Quality Indicator (CQI) of the second codeword (if present), the Precoding Matrix Indicator (PMI) (if reported), and the layer indicator (if reported)) is discarded in sequence according to the content of the sub-configuration until the resource requirements or bitrate restrictions are met. In some embodiments, if multiple CSI reports are included on a reporting resource, when it is necessary to discard the wideband part of Part 2, the CSI reports containing sub-configurations are discarded according to the sub-configurations. If all CSI sub-reports of sub-configurations are discarded but still do not meet the resource requirements or bitrate restrictions, all wideband pars of Part 2 in other CSI reports will be discarded together.

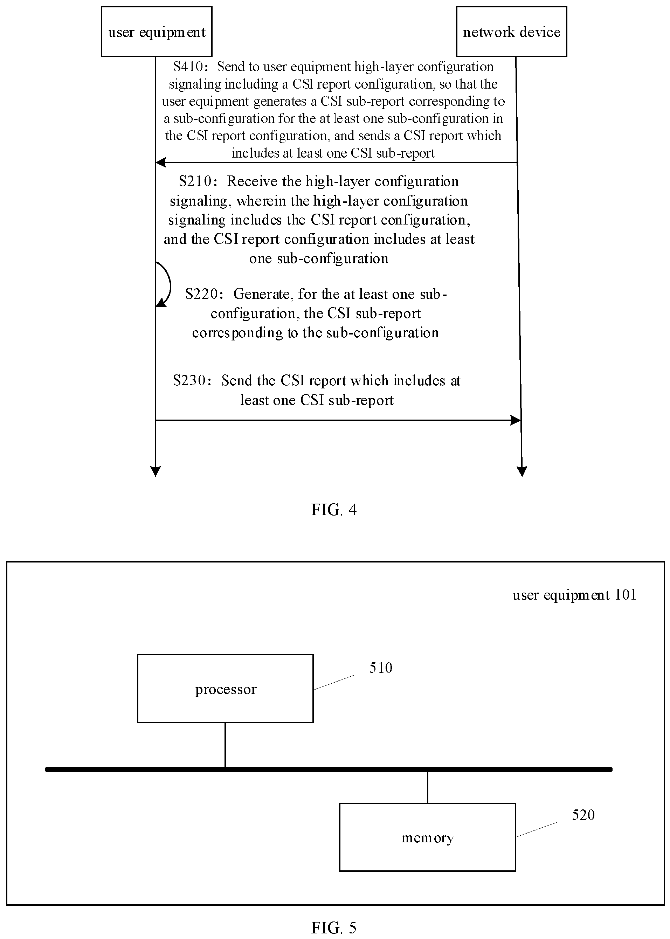

In one embodiment, as shown in Fig. 4, the flowchart of the channel state information processing method provided in the embodiments of the present application is applied to network device 102. The implementation process of the method may include but is not limited to the following Step S410:

At Step S410: high-layer configuration signaling including a CSI report configuration is sent to user equipment, so that the user equipment generates a CSI sub-report corresponding to a sub-configuration for the at least one sub-configuration in the CSI report configuration, and sends a CSI report which includes at least one CSI sub-report.

It should be noted that the high-layer configuration signaling includes CSI report configuration, the CSI report configuration includes at least one sub-configuration, so that the user equipment generates a CSI sub-report corresponding to at least one sub-configuration in the CSI report configuration, and sends the CSI report containing at least one CSI sub-report. Among them, the configuration methods of high-layer configuration signaling, CSI report configuration, sub-configuration, CSI sub-report, and CSI report have been explained in the above embodiments and will not be repeated here.

It should be noted that each sub-configuration has a corresponding associated channel state information-reference signal CSI-RS resource, and the CSI sub-report corresponding to the sub-configuration is determined based on the first type of parameter and the corresponding CSI-RS resource associated with the sub-configuration.

The embodiments of the present application mainly involve the configuration scheme for reporting multiple sets of CSI information in one CSI report, as well as the time requirements for CSI calculation. In some cases, the user equipment receives high-layer configuration signaling, where the high-layer configuration signaling includes CSI report configuration, and the CSI report configuration includes at least one sub-configuration. Then, for at least one sub-configuration, generates a CSI sub-report corresponding to the sub-configuration. The present application reports multiple sets of CSI information in one CSI report (each set of CSI information corresponds to an antenna shutdown mode or power mode), which can help the base station obtain channel states under multiple antenna shutdown modes, thereby better performing data scheduling. Therefore, the present application can generate CSI sub-reports corresponding to the required sub-configurations, and send CSI reports containing at least one CSI sub-report to network devices, thereby enabling UE to measure and report CSI according to different configurations, improving the accuracy and efficiency of data scheduling.

It should be noted that although the operations are described in a specific order in the accompanying drawings in the embodiments of the present application, they should not be understood as requiring the execution of these operations in the specific order or serial order shown, or requiring the execution of all the operations shown to obtain the desired results. In specific environments, multitasking and parallel processing may be advantageous.

In addition, in the embodiments of the present application, the description of each embodiment has its own emphasis. For the parts that are not detailed or recorded in a certain embodiment, please refer to the relevant descriptions of other embodiments.

The embodiments of the present application further provide a user equipment 101, as shown in Fig. 5, which includes: one or more processors 510; memory 520 stores one or more programs, which, when executed by the one or more processors 510, enable the one or more processors 510 to implement the channel state information CSI processing method applied to the user equipment 101 in the above embodiments.

The memory 520, as a non-transient network system, can be used to store non-transient software programs and non-transient computer executable programs. In addition, the memory 520 may include high-speed random access memory, as well as non-transient memory such as at least one disk storage device, flash memory device, or other non-transient solid-state storage device. In some implementations, the memory 520 may optionally include a remote memory 520 that is remotely set relative to the processor 510, which can be connected to the processor 510 through a network. Examples of the above networks include but are not limited to the Internet, enterprise intranet, local area network, mobile communication network and their combinations.

The memory 520 can be implemented in the form of read-only memory (ROM), static storage devices, dynamic storage devices, or random access memory (RAM) etc. The memory 520 can store operating systems and other application programs. When implementing the technical solutions provided in the embodiments of this specification through software or firmware, the relevant program code is saved in the memory 520 and called by the processor 510 to execute the methods of the embodiments of the present application.

The processor 510 can be implemented using a general-purpose CPU (Central Processing Unit), microprocessor, Application Specific Integrated Circuit (ASIC), or one or more integrated circuits to execute relevant programs and implement the technical solutions provided in the embodiments of the present application.

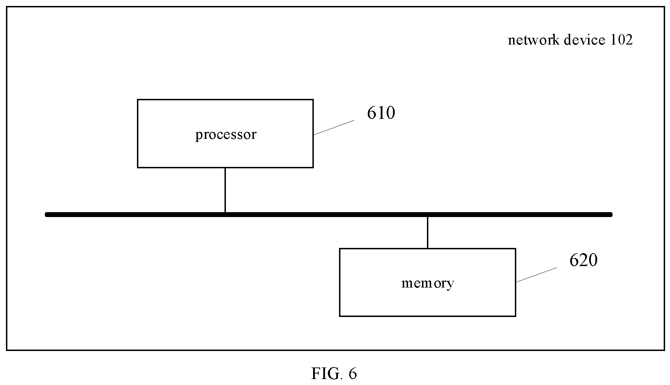

The embodiments of the present application further provide a network device 102, as shown in Fig. 6, which includes: one or more processors 610; memory 620 stores one or more programs, which, when executed by the one or more processors 610, enable the one or more processors 610 to implement the channel state information CSI processing method applied to the network device 102 in the above embodiments.

The memory 620, as a non-transient network system, can be used to store non-transient software programs and non-transient computer executable programs. In addition, the memory 620 may include high-speed random access memory, as well as non-transient memory such as at least one disk storage device, flash memory device, or other non-transient solid-state storage device. In some implementations, the memory 620 may optionally include a remote memory 620 that is remotely set relative to the processor 610, which can be connected to the processor 610 through a network. Examples of the above networks include but are not limited to the Internet, enterprise intranet, local area network, mobile communication network and their combinations.

The memory 620 can be implemented in the form of read-only memory (ROM), static storage devices, dynamic storage devices, or random access memory (RAM) etc. The memory 620 can store operating systems and other application programs. When implementing the technical solutions provided in the embodiments of this specification through software or firmware, the relevant program code is saved in the memory 620 and called by the processor 610 to execute the methods of the embodiments of the present application.

The processor 610 can be implemented using a general-purpose CPU (Central Processing Unit), microprocessor, Application Specific Integrated Circuit (ASIC), or one or more integrated circuits to execute relevant programs and implement the technical solutions provided in the embodiments of the present application.

In some embodiments, user equipment 101 and network device 102 also include input/output interfaces for implementing information input and output; Communication interface for achieving communication and interaction between this device and other devices, can be achieved through wired communication (such as USB, network cable, etc.) or wireless communication (such as mobile network, WIFI, Bluetooth, etc.); Bus, which transfers information between various components of the device, such as processors, memory, input/output interfaces, and communication interfaces; Among them, the processor, memory, input/output interface, and communication interface can be connected to each other through a bus within the device.

The embodiment of the present application also provides a computer-readable storage medium storing computer executable instructions for implementing, for example, the channel state information CSI processing method applied to user equipment 101; or the channel state information CSI processing method applied to network device 102.

The embodiment of the present application also provides a computer program product, including a computer program or computer instructions stored in a computer-readable storage medium. The processor of the computer device reads the computer program or computer instructions from the computer-readable storage medium, and the processor executes the computer program or computer instructions to enable the computer device to implement, for example, the channel state information CSI processing method applied to user equipment 101; or the channel state information CSI processing method applied to network device 102.

The system architecture and application scenarios described in the embodiments of the present application are intended to provide a clearer explanation of the technical solution provided in this application, and do not constitute a limitation on the technical solution provided in the embodiments of the present application. Those skilled in the art know that with the evolution of the system architecture and the emergence of new application scenarios, the technical solution provided in the embodiments of the present application is also applicable to similar technical problems.

Those skilled in the art can understand that implementing all or part of the processes in the above embodiments can be accomplished by instructing relevant hardware through a computer program. The computer program can be stored in a non-volatile computer-readable storage medium, and when executed, it may include the processes of the embodiments of the above methods. Among them, any reference to memory, storage, database or other medium used in the embodiments provided in the present application may include non-volatile and/or volatile memory. Non-volatile memory can include read-only memory (ROM), programmable ROM (PROM), electrically programmable ROM (EPROM), electrically erasable programmable ROM (EEPROM), or flash memory. Volatile memory can include random access memory (RAM) or external cache memory. As an illustration and not a limitation, RAM can be obtained in various forms, such as static RAM (SRAM), dynamic RAM (DRAM), synchronous DRAM (SDRAM), double data rate SDRAM (DDRSDRAM), enhanced SDRAM (ESDRAM), Synchlink DRAM (SLDRAM), Rambus direct RAM (RDRAM), direct memory bus dynamic RAM (DRDRAM), and memory bus dynamic RAM (RDRAM).

Those skilled in the art can understand that all or some of the steps and systems disclosed in the above methods can be implemented as software, firmware, hardware, and appropriate combinations thereof. Some or all physical components can be implemented as software executed by processors such as central processing units, digital signal processors, or microprocessors, or as hardware, or as integrated circuits such as application specific integrated circuits. Such software can be distributed on computer-readable medium, which can include computer storage medium (or non-temporary medium) and communication medium (or temporary medium). As is well known to those skilled in the art, the term computer storage medium includes volatile and non-volatile, removable and non-removable medium implemented in any method or technology for storing information, such as computer-readable instructions, data structures, program modules, or other data. Computer storage medium include but are not limited to RAM, ROM, EEPROM, flash memory, or other memory technologies, CD-ROM, Digital versatile disc (DVD) or other optical storage, magnetic cassette, magnetic tape, magnetic disk storage or other magnetic storage devices, or any other medium that can be used to store desired information and can be accessed by a computer. In addition, it is well known to those skilled in the art that communication medium typically include computer-readable instructions, data structures, program modules, or other data in modulated data signals such as carriers or other transmission mechanisms, and may include any information delivery medium.

The above description of some embodiments of the present application with reference to the accompanying drawings does not limit the scope of the claims of the present application. Any modifications, equivalent substitutions, and improvements made by those skilled in the field without departing from the scope and essence of the present application shall be within the scope of the claims of the present application.

**Claims**

1. A channel state information called CSI processing method, performed by user equipment, comprising:

receiving high-layer configuration signaling, wherein the high-layer configuration signaling comprises a CSI report configuration, and the CSI report configuration comprises at least one sub-configuration;
generating, for the at least one sub-configuration, a CSI sub-report corresponding to the sub-configuration; and
sending a CSI report which comprises the at least one CSI sub-report.

2. The method according to claim 1, wherein each sub-configuration has a correspondingly associated channel state information-reference signal called CSI-RS resource; and
generating the CSI sub-report corresponding to the sub-configuration comprises:
determining the CSI sub-report corresponding to the sub-configuration according to a first type of parameter and a CSI-RS resource correspondingly associated with the sub-configuration.

3. The method according to claim 2, wherein the CSI report configuration further comprises the codebook configuration, and the codebook configuration is configured with the first type of parameter.

4. The method according to claim 3, wherein in the case where a first condition is not satisfied, the first type of parameter in the codebook configuration is used to determine a CSI sub-report corresponding to a sub-configuration not configured with a first type of parameter;
the first condition comprises at least one of the following:

part of the sub-configurations in the CSI report configuration are configured with the first type of parameter, and a number of associated ports in at least one sub-configuration configured with the first type of parameter is equal to a number of ports configured in a CSI-RS resource set associated with the CSI report configuration; or
all of the sub-configurations in the CSI report configuration are configured with the first type of parameters.

5. The method according to claim 4, wherein in the case where the first condition is satisfied, determining that the first type of parameter used in the CSI sub-report corresponding to the sub-configuration is obtained in at least one of the following manners:

obtaining, in the case where the sub-configuration is configured with the first type of parameter, the first type of parameter from the sub-configuration;
or

obtaining, in the case where the sub-configuration is not configured with the first type of parameter, the first type of parameter from another sub-configuration, wherein a number of associated ports in the other sub-configuration is equal to a number of ports configured in the CSI-RS resource set associated with the CSI report configuration.

6. The method according to claim 2, wherein in the case where a second condition is satisfied, the CSI report configuration is configured with the first type of parameter only in the sub-configuration; the second condition comprises at least one of the following:

part of the sub-configurations in the CSI report configuration are configured with the first type of parameter, and a number of associated ports in at least one sub-configuration configured with the first type of parameter is equal to a number of ports configured in a CSI-RS resource set associated with the CSI report configuration; or all of the sub-configurations in the CSI report configuration are configured with the first type of parameters.

7. The method according to claim 2, wherein in the case where at least one of the sub-configurations comprises first configuration information and/or third configuration information, the CSI report configuration is configured with the first type of parameter only in the sub-configuration, and at least one of the sub-configurations only comprises third configuration information, then the first type of parameter in the sub configuration that only comprises third configuration information is obtained in at least one of the following manners:

obtaining the first type of parameter from a sub-configuration which is configured with the first type of parameter and has a largest number of associated ports, obtaining the first type of parameter from predefined first type of parameters, or obtaining the first type of parameter from default first type of parameters.

8. The method according to any one of claims 2-7, wherein the first type of parameter comprises at least one of the following:

a rank restriction parameter; a codebook subset restriction parameter; a port subset indicator parameter; a parameter n1 representing a number of antenna ports in a first dimension; a parameter n2 representing a number of antenna ports in a second dimension; or a parameter ng representing a number of antenna port panels.

9. The method according to claim 1, wherein the CSI report configuration is associated with one CSI-RS resource set, the CSI-RS resource set comprises K CSI-RS resources, each sub-configuration is correspondingly associated with one or more CSI-RS resources in the CSI-RS resource set;

in the case of K=A1, the CSI-RS resource set is configured with no more than 32 CSI-RS ports; in the case of K=A2, the CSI-RS resource set is configured with no more than 16 CSI-RS ports; or in the case of K=A3, the CSI-RS resource set is configured with no more than 8 CSI-RS ports; the values of A1, A2, and A3 are related to at least one of the following: a type of a sub-configuration configured in the CSI report configuration, a number of sub-configurations configured in the CSI report configuration, a time domain type of a CSI report, a maximum number of sub-configurations that can be configured in the CSI report configuration, a maximum number of sub-configurations that can be triggered by one trigger state of a DCI or MAC CE in the CSI report configuration, or a capability parameter of user equipment.

10. The method according to claim 1, wherein prior to generating, for the at least one sub-configuration, the CSI sub-report corresponding to the sub-configuration, the method further comprises:

receiving downlink control information called DCI from a physical downlink control channel called PDCCH, wherein the DCI indicates to report a CSI report and trigger one or more sub-configurations; generating, for the at least one sub-configuration, the CSI sub-report corresponding to the sub-configuration comprises:

generating, for each triggered sub-configuration, the CSI sub-report corresponding to the triggered sub-configuration; and sending the CSI report which comprises the at least one CSI sub-report comprises:

sending, in the case where a first time is greater than a first threshold and a second time is greater than a second threshold, a CSI report which comprises the at least one CSI sub-reports through a physical uplink shared channel called PUSCH;

wherein the first time represents a time length between an end symbol of the PDCCH and a start symbol of the PUSCH;

the second time represents a time length between an end symbol of an aperiodic CSI-RS resource associated with the CSI report and a start symbol of the PUSCH, or a time length between an end symbol of a measurement resource associated with the CSI report and a start symbol of the PUSCH.

11. The method according to claim 10, wherein the first threshold is related to a first parameter, and the second threshold is related to a second parameter; the values of the first parameter and the second parameter are related to at least one of the following:

a number of ports configured in a CSI-RS resource corresponding to a triggered sub-configuration;
a number of CSI-RS ports indicated by a triggered sub-configuration;
a sum of the number of CSI-RS ports associated with/indicated by the triggered sub-configuration;
a number of triggered sub-configurations;
a frequency characteristics of CSI report reporting;
a capability parameter of user equipment; or
a type of a triggered sub-configuration.

12. The method according to claim 11, wherein the first parameter comprises corresponding loose and tight values, and/or the second parameter comprises corresponding loose and tight values;
in the case where a fourth condition is satisfied, the first parameter and/or the second parameter take the corresponding loose values, respectively.

13. The method according to claim 12, wherein the fourth condition comprises at least one of the following:

a number of triggered sub-configurations is greater than a third threshold, wherein the third threshold is an integer greater than or equal to 2;
a CSI report is reported in a wideband CSI reporting manner;
a number of ports of a CSI-RS resource associated with a triggered sub-configuration is greater than a fourth threshold, wherein the fourth threshold is an integer less than or equal to 4;
a sum of the number of CSI-RS ports associated with/indicated by the triggered sub-configuration is greater than a fifth threshold, wherein the fifth threshold is an integer less than or equal to 8;
a user capability parameter indicates that the first parameter and/or the second parameter take the corresponding loose values, respectively; or
a type of a triggered sub-configuration is a first type, wherein the first type indicates a sub-configuration configured with the first configuration information or the second configuration information.

14. The method according to claim 1, wherein the CSI report comprises a sub-configuration configured with second configuration information and a sub-configuration configured with third configuration information, wherein the sub-configuration configured with the third configuration information is associated with a first type of CSI-RS resource;
the first type of CSI-RS resource comprises at least one of the following:

a CSI-RS resource indicated by second configuration information configured in a sub-configuration with a lowest index among sub-configurations configured with second configuration information;
a CSI-RS resource configured by a high-layer parameter;
a CSI-RS resource indicated by second configuration information configured in a sub-configuration in which the second configuration information comprises a resource in a lowest index number;
a predefined CSI-RS resource; or
a CSI-RS resource indicated by second configuration information configured in a predefined sub-configuration.

15. A channel state information called CSI processing method, performed by a network device, comprising:
sending to user equipment high-layer configuration signaling which comprises a CSI report configuration, so that the user equipment generates a CSI sub-report corresponding to a sub-configuration for the at least one sub-configuration in the CSI report configuration, and sends a CSI report which comprises the at least one CSI sub-report.

16. The method according to claim 15, wherein each sub-configuration has a correspondingly associated channel state information-reference signal called CSI-RS resource; and
the CSI sub-report corresponding to the sub-configuration is determined according to a first type of parameter and a CSI-RS resource correspondingly associated with the sub-configuration.

**17.** The method according to claim 16, wherein the CSI report configuration further comprises a codebook configuration, and the codebook configuration is configured with the first type of parameter.

**18.** The method according to claim 17, wherein in the case where a first condition is not satisfied, the first type of parameter in the codebook configuration is used to determine a CSI sub-report corresponding to a sub-configuration not configured with a first type of parameter;

the first condition comprises at least one of the following:

part of the sub-configurations in the CSI report configuration are configured with the first type of parameter, and a number of associated ports in at least one sub-configuration configured with the first type of parameter is equal to a number of ports configured in a CSI-RS resource set associated with the CSI report configuration; or
all of the sub-configurations in the CSI report configuration are configured with the first type of parameters.

**19.** The method according to claim 18, wherein in the case where the first condition is satisfied, determining that the first type of parameter used in the CSI sub-report corresponding to the sub-configuration is obtained in at least one of the following manners:

obtaining, in the case where the sub-configuration is configured with the first type of parameter, the first type of parameter from the sub-configuration;
or
obtaining, in the case where the sub-configuration is not configured with the first type of parameter, the first type of parameter from another sub-configuration, wherein a number of associated ports in the other sub-configuration is equal to a number of ports configured in the CSI-RS resource set associated with the CSI report configuration.

**20.** The method according to claim 16, wherein in the case where a second condition is satisfied, the CSI report configuration is configured with the first type of parameter only in the sub-configuration;

the second condition comprises at least one of the following:

part of the sub-configurations in the CSI report configuration are configured with the first type of parameter, and a number of associated ports in at least one sub-configuration configured with the first type of parameter is equal to a number of ports configured in a CSI-RS resource set associated with the CSI report configuration; or
all of the sub-configurations in the CSI report configuration are configured with the first type of parameters.

**21.** The method according to any one of claims 16-19, wherein the first type of parameter comprises at least one of the following:

a rank restriction parameter;
a codebook subset restriction parameter;
a port subset indicator parameter;
a parameter n1 representing a number of antenna ports in a first dimension;
a parameter n2 representing a number of antenna ports in a second dimension; or
a parameter ng for a number of antenna port panels.

**22.** The method according to claim 15, wherein the CSI report configuration is associated with one CSI-RS resource set, the CSI-RS resource set comprises K CSI-RS resources, each sub-configuration is correspondingly associated with one or more CSI-RS resources in the CSI-RS resource set;

in the case of K=A1, the CSI-RS resource set is configured with no more than 32 CSI-RS ports;
in the case of K=A2, the CSI-RS resource set is configured with no more than 16 CSI-RS ports; or
in the case of K=A3, the CSI-RS resource set is configured with no more than 8 CSI-RS ports;
the values of A1, A2, and A3 are related to at least one of the following: a type of a sub-configuration configured in the CSI report configuration, a number of sub-configurations configured in the CSI report configuration, a time domain type of a CSI report, a maximum number of sub-configurations that can be configured in the CSI report configuration, a maximum number of sub-configurations that can be triggered by one trigger state of a DCI or MAC CE in the CSI report configuration, or a capability parameter of user equipment.

**23.** The method according to claim 15, wherein the CSI report comprises a sub-configuration configured with second configuration information and a sub-configuration configured with third configuration information, wherein the sub-configuration configured with the third configuration information is associated with a first type of CSI-RS resource;

the first type of CSI-RS resource comprises at least one of the following:

a CSI-RS resource indicated by second configuration information configured in a sub-configuration with a lowest index among sub-configurations configured with second configuration information;

a CSI-RS resource configured by a high-layer parameter;

a CSI-RS resource indicated by second configuration information configured in a sub-configuration in which the second configuration information comprises a resource in a lowest index number;

a predefined CSI-RS resource; or

a CSI-RS resource indicated by second configuration information configured in a predefined sub-configuration.

24. User equipment, comprising:

one or more processors;
a memory storing one or more programs, which when executed by the one or more processors, cause the one or more processors to implement the method according to any one of claims 1-14.

25. A network device, comprising:

one or more processors;
a memory storing one or more programs, which when executed by the one or more processors, cause the one or more processors to implement the method according to any one of claims 15-23.

26. A computer-readable storage medium, storing a computer program, when being executed by a processor, the computer program implements the method according to any one of claims 1-14, or the method according to any one of claims 15-23.

FIG. 1

S210: Receive high-layer configuration signaling, wherein the high-layer configuration signaling includes a CSI report configuration, and the CSI report configuration includes at least one sub-configuration

S220: Generate, for the at least one sub-configuration, a CSI sub-report corresponding to the sub-configuration

S230: Send a CSI report which includes at least one CSI sub-report

FIG. 2

CSI report
configuration

sub-configuration
list

sub-configuration #1

rank restriction
parameter

codebook subset
restriction parameter

port subset indicator
parameter

n1、n2

...

sub-configuration #2

rank restriction
parameter

codebook subset
restriction parameter

port subset indicator
parameter

n1、n2

...

...

codebook configuration

codebook type

rank restriction
parameter

codebook subset
restriction parameter

n1、n2

...

FIG. 3

user equipment

network device

S410: Send to user equipment high-layer configuration signaling including a CSI report configuration, so that the user equipment generates a CSI sub-report corresponding to a sub-configuration for the at least one sub-configuration in the CSI report configuration, and sends a CSI report which includes at least one CSI sub-report

S210: Receive the high-layer configuration signaling, wherein the high-layer configuration signaling includes the CSI report configuration, and the CSI report configuration includes at least one sub-configuration

S220: Generate, for the at least one sub-configuration, the CSI sub-report corresponding to the sub-configuration

S230: Send the CSI report which includes at least one CSI sub-report

FIG. 4

user equipment 101

processor 510

memory 520

FIG. 5

network device 102

processor 610

memory 620

FIG. 6

## INTERNATIONAL SEARCH REPORT

| International application No. |
| --- |
| **PCT/CN2024/099269** |

**A.    CLASSIFICATION OF SUBJECT MATTER**

H04B7/06(2006.01)i

According to International Patent Classification (IPC) or to both national classification and IPC

**B.    FIELDS SEARCHED**

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT, ENTXT, ENTXTC, 3GPP: 报告, 配置, 秩, 码本, 端口, 时间, 间隔, report, RI, CBSR, port, CSI, CSI-RS, PDCCH, PUSCH, configur+, interval

**C.    DOCUMENTS CONSIDERED TO BE RELEVANT**

| Category* | Citation of document, with indication, where appropriate, of the relevant passages | Relevant to claim No. |
| --- | --- | --- |
| X | CN 116762305 A (NEC CORP.) 15 September 2023 (2023-09-15) <br> description, paragraphs 0006-0011 and 0047-0075, and figures 1 and 3-6 | 1-3, 6-9, 14-17, 20-26 |
| X | WO 2022031077 A1 (LG ELECTRONICS INC.) 10 February 2022 (2022-02-10) <br> claims 1-13, description, paragraphs 0258-0289, and figures 8-12 | 1-3, 6-9, 14-17, 20-26 |
| A | CN 114600387 A (SAMSUNG ELECTRONICS CO., LTD.) 07 June 2022 (2022-06-07) <br> entire document | 1-26 |
| A | US 2021320704 A1 (QUALCOMM INC. et al.) 14 October 2021 (2021-10-14) <br> entire document | 1-26 |
| A | VIVO. "Further Discussion and Evaluation on MTRP CSI and Partial Reciprocity" <br> *3GPP TSG RAN WG1 #103-e, R1-2009509*, 13 November 2020 (2020-11-13), <br> entire document | 1-26 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 August 2024** | **21 August 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/099269**

| Patent document cited in search report | | | Publication date (day/month/year) | Patent family member(s) | | | Publication date (day/month/year) |
|---|---|---|---|---|---|---|---|
| CN | 116762305 | A | 15 September 2023 | US | 2024063870 | A1 | 22 February 2024 |
| | | | | WO | 2022147845 | A1 | 14 July 2022 |
| | | | | EP | 4275317 | A1 | 15 November 2023 |
| | | | | JP | 2024502192 | A | 17 January 2024 |
| WO | 2022031077 | A1 | 10 February 2022 | | None | | |
| CN | 114600387 | A | 07 June 2022 | JP | 2022544523 | A | 19 October 2022 |
| | | | | EP | 3994912 | A1 | 11 May 2022 |
| | | | | US | 2022224476 | A1 | 14 July 2022 |
| | | | | US | 2021050976 | A1 | 18 February 2021 |
| | | | | WO | 2021029705 | A1 | 18 February 2021 |
| | | | | KR | 20210019827 | A | 23 February 2021 |
| US | 2021320704 | A1 | 14 October 2021 | EP | 3850759 | A1 | 21 July 2021 |
| | | | | WO | 2020051896 | A1 | 19 March 2020 |
| | | | | CN | 112655157 | A | 13 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311270511